# DEMANDE DE BREVET EUROPEEN

(11) **EP 0 847 683 A1**
(43) Date de publication de la demande: **17.06.1998**
(21) Numéro de dépôt: 97403031.4
(22) Date de dépôt: 12.12.1997
(51) Int. Cl.: A01C 7/20, A01B 73/04, A01M 7/00

(54) **Semoir à grande largeur de travail**

(30) Priorité: 13.12.1996 FR 9615349
(71) Demandeur: GBLS, 44190 Getigne (FR)
(72) Inventeur: Besson, Patrick, 44190 Getigne (FR); Le Brun, Jean-François, La Grille, 44470 Thouare Sur Loire (FR)
(74) Mandataire: Dawidowicz, Armand

(57) **Abrégé**

L'invention concerne un semoir (1) dont l'ensemble porte-éléments semeurs (5) est constitué d'un tronçon central (6), porté par ledit châssis (2) à l'arrière de ce dernier, et de deux demi-rampes articulées sur ledit tronçon central (6).

Chaque demi-rampe du semoir est constituée d'au moins deux éléments (7A ; 7B) de rampe successifs articulés chacun autour d'un axe (8 ; 9) sensiblement horizontal parallèle à la direction d'avancement du semoir, et équipés respectivement d'au moins une roue (10), chaque élément (7A ; 7B) de demi-rampe étant en outre muni d'au moins un organe d'actionnement agencé pour permettre d'une part, le pivotement libre dudit élément autour de son axe d'articulation (8 ; 9) lorsque ledit élément est en appui au sol, et d'autre part, le pivotement commandé dudit élément (7A ; 7B) de rampe en particulier lors du passage d'une position travail à une position transport.

Application : semis en ligne, épandage d'engrais en granulés.

## Description

La présente invention concerne de manière générale les semoirs dits à grande largeur de travail qui se caractérisent par une largeur de travail supérieure à la largeur maximale autorisée pour circuler sur route de manière à pouvoir travailler de plus grandes surfaces de culture en un temps réduit.

L'invention concerne en particulier un semoir, du type comprenant un châssis roulant tractable supportant une trémie et un ensemble porte-éléments semeurs constitué d'un tronçon central porté par ledit châssis à l'arrière de ce dernier et de deux demi-rampes, de préférence indépendantes, articulées sur ledit tronçon central et équipées desdits éléments semeurs.

Un tel semoir à grande largeur de travail est décrit dans le brevet FR-A-2.722.362. Un tel semoir est notamment destiné à permettre le semis en ligne de céréales, d'oléagineux et de protéagineux. Ce semoir appartenant à la catégorie des semoirs traînés et non portés de grande largeur permet, du fait de la présence d'un châssis de support de trémie traîné, une capacité de trémie importante, donc un poids de semences embarquées élevé. L'ensemble porte-éléments semeurs est quant à lui disposé à l'arrière de ce châssis de manière classique. Toutefois, tous les semoirs conçus à ce jour présentent des demi-rampes indépendantes constituées chacune d'un seul élément articulé généralement sur un élément central commun. Du fait de la réalisation de chaque demi-rampe en un seul élément, il en résulte un encombrement en hauteur relativement important, en particulier lorsque le semoir est placé en position transport, les demi-rampes étant relevées et s'étendant généralement dans un plan sensiblement vertical et transversalement à la direction de déplacement du semoir. Ceci nuit aux possibilités de transport d'un tel semoir. En outre, il est bien évident que la largeur de travail atteinte au moyen d'une demi-rampe constituée d'un seul élément ne saurait égaler celle atteinte si la demi-rampe était constituée de plusieurs éléments. Enfin, la présence d'éléments de demi-rampe de grande longueur nuit à la qualité du travail réalisé. En effet, avec un élément rigide de grande longueur, il devient quasiment impossible de suivre l'évolution du profil du terrain à travailler.

La présente invention a donc pour but de pallier les inconvénients précités en proposant un semoir, à grande capacité, d'une largeur de travail supérieure à la largeur maximale autorisée pour circuler sur route, tout en étant capable, en position transport, de correspondre au gabarit routier autorisé sans pour autant nécessiter la réalisation d'un châssis spécial.

Un autre but de la présente invention est de proposer un semoir dont les éléments de demi-rampe sont commandés en déplacement de manière telle qu'ils permettent, en position travail, une efficacité maximale desdits outils, en position intermédiaire, une simplification des manoeuvres notamment en bout de champ et un passage rapide de la position travail à la position transport et inversement sans intervention humaine.

Encore un autre but de la présente invention est de proposer un semoir dont l'ensemble porte-éléments peut être dissocié du châssis roulant tractable pour permettre la réutilisation du châssis traîné à toute autre application.

A cet effet, l'invention a pour objet un semoir, du type comprenant un châssis roulant tractable et un ensemble porte-éléments semeurs constitué d'un tronçon central porté par ledit châssis à l'arrière de ce dernier et de deux demi-rampes, de préférence indépendantes, articulées sur ledit tronçon central et équipées desdits éléments semeurs, caractérisé en ce que chaque demi-rampe est constituée d'au moins deux éléments de rampe successifs, à savoir un élément intérieur et un élément extérieur, articulés chacun autour d'un axe sensiblement horizontal parallèle à la direction d'avancement du semoir, et équipés respectivement d'au moins un organe d'appui au sol, tel qu'une roue, pour s'étendre en position de travail au moins sensiblement horizontalement et transversalement à la direction de déplacement du semoir, chaque élément de demi-rampe étant en outre muni d'au moins un organe d'actionnement agencé pour permettre d'une part, le pivotement libre dudit élément autour de son axe d'articulation lorsque ledit élément de rampe est en appui au sol, et d'autre part, le pivotement commandé dudit élément de rampe, en particulier pour le passage dudit élément de rampe d'une position de travail à une position de transport dans laquelle ledit élément de rampe s'étend sensiblement verticalement et transversalement à la direction de déplacement du semoir.

Grâce à une telle conception générale, on obtient une largeur de travail très importante tout en maintenant une grande efficacité des éléments semeurs portés par chaque demi-rampe du fait que chaque demi-rampe suit le profil du terrain à travailler.

On connaît, dans un domaine différent, par le document WO-A-86/07522, un arrangement de rouleaux constitué d'éléments de rouleaux portés chacun par des éléments de demi-rampes, les demi-rampes étant elles-mêmes articulées sur un châssis central. Outre le fait qu'un tel dispositif ne constitue pas un semoir, chaque élément intérieur de demi-rampe ne peut être déplacé librement à pivotement. Seul un pivotement commandé est possible au moyen d'un vérin. En effet, le mécanisme d'actionnement est constitué de deux bras pivotants dont le déplacement à pivotement est commandé au moyen de tiges réglables en longueur. Un vérin relie ce bras pivotant avec le premier élément de demi-rampes, tandis que le câble relie l'autre extrémité de ce bras oscillant au deuxième élément de demi-rampes. Un tel montage ne permet pas un pivotement libre de l'élément par rapport au châssis central. En conséquence, ce document ne permet pas de répondre au problème psoé, à savoir pouvoir épouser parfaitement le profil du terrain au moyen de chaque élément de demi-rampes. Dans le cas de ce dispositif antérieur, seuls les éléments extérieurs de la demi-rampe peuvent suivre le profil du terrain, grâce à une liaison par câble avec l'élément de demi-rampe intérieur.

Selon une forme de réalisation préférée de l'invention, le tronçon central de l'ensemble porte-éléments semeurs est relié audit châssis au moyen d'un organe de liaison permettant un positionnement à hauteur réglable dudit tronçon central par rapport audit châssis.

Grâce au fait que le tronçon central ou, de manière plus générale, l'ensemble porte-éléments semeurs est attelé audit châssis au moyen d'un organe de liaison constitué d'un attelage incorporant un système de relevage, les manoeuvres en bout de champ sont facilitées et un désaccouplement châssis/ensemble porte-éléments semeurs est facilité pour permettre une polyvalence du châssis roulant tractable.

L'invention sera bien comprise à la lecture de la description suivante d'un exemple de réalisation, en référence aux dessins annexés dans lesquels :
la figure 1 représente une vue de côté d'un semoir représenté à la fois en position travail et en position transport ;
la figure 2 représente une vue de dessus du semoir de la figure 1, le tracteur n'ayant pas été représenté ;
la figure 3 représente une vue arrière du semoir de la figure 1 en position travail ;
la figure 4 représente une vue arrière du semoir de la figure 1 en position bout de champ ;
la figure 5 représente une vue arrière du semoir au cours de son passage de la position travail à la position transport et
la figure 6 représente une vue schématique en coupe transversale du tronçon central équipé d'un dispositif de tension du câble.

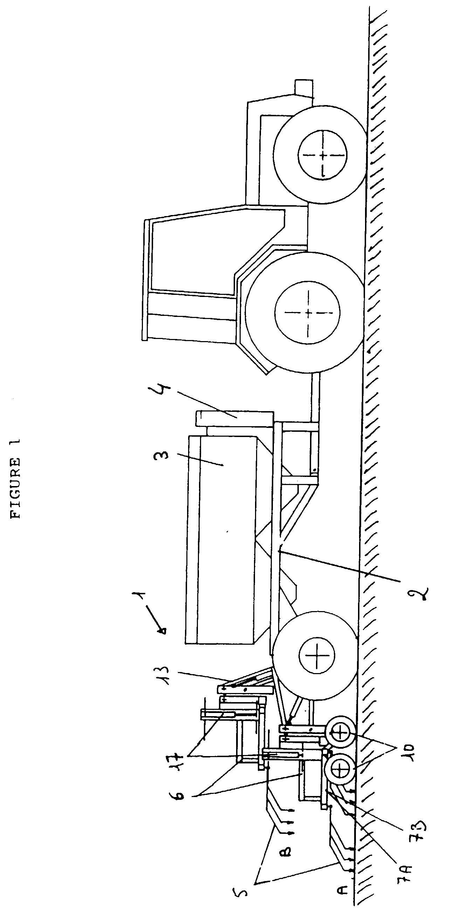

Le semoir, objet de l'invention, est représenté par la référence générale 1. Ce semoir 1 est constitué d'un châssis 2 traîné attelé à un véhicule moteur d'un tracteur au moyen d'un attelage approprié, comme le montre la figure 1. Ce châssis 2, équipé de roues disposées de préférence à l'arrière dudit châssis, supporte une trémie 3. Du fait de cette installation de la trémie 3 sur le châssis 2 roulant, cette trémie 3 peut être de grande capacité (2000 à 3500 kg), condition nécessaire pour permettre une autonomie suffisante du semoir y compris dans le cas d'un travail sur grande largeur.

La trémie 3 est combinée avec un dispositif de dosage des produits à distribuer, un dispositif de véhiculage desdits produits dosés transportant ceux-ci au voisinage des organes d'implantation encore appelés éléments semeurs 5 et un dispositif de distribution desdits produits dosés auxdits éléments semeurs 5. Généralement, les produits à distribuer sont constitués par des semences. Le dispositif de véhiculage des graines est généralement du type pneumatique. Ainsi, à titre d'exemple, un ventilateur 4 disposé, sur le châssis 2 porteur, à l'avant de la trémie 3 assure le transport automatique des graines vers l'arrière du châssis 2 pour les distribuer aux éléments semeurs 5. Le dispositif de distribution est quant à lui du type mécanique. Il est à noter que l'ensemble des dispositifs utilisés pour le dosage des graines, le véhiculage des graines, la distribution des graines et la pose des graines dans le sol peuvent être des dispositifs parfaitement classiques et bien connus à ceux versés dans cet art.

Chaque élément semeur 5 peut affecter un grand nombre de formes. Il peut en outre être doté d'un dispositif de recouvrement destiné à égaliser la surface du sol et à recouvrir convenablement les graines disposées dans le sol.

L'ensemble des éléments semeurs 5 permettant la disposition des graines dans le sol est porté par des demi-rampes 7, de préférence indépendantes, articulées sur un tronçon central 6, ce tronçon central 6 étant lui-même porté par le châssis 2 à l'arrière de ce dernier. Tronçon central 6 et demi-rampes 7 constituent un ensemble appelé ensemble porte-éléments semeurs 5. Le tronçon central 6 de l'ensemble porte-éléments semeurs 5 est relié au châssis 2 au moyen d'un organe de liaison 13 permettant un positionnement à hauteur réglable dudit tronçon central 6 par rapport audit châssis 2. Cet organe de liaison 13 est, de préférence, constitué par un attelage équipé d'un système de relevage permettant de relever le tronçon central 6 par rapport au châssis 2. Du fait de ce dispositif de relevage, il est possible de régler la hauteur ou profondeur de travail des éléments semeurs 5 disposés sur les demi-rampes 7 et, à l'inverse, de relever ce tronçon central 6 notamment pour les manoeuvres en bout de champ. Cette seconde caractéristique sera plus particulièrement décrite ci-après. Le relevage du tronçon central 6, par rapport au châssis 2 a en outre pour effet de stopper le système de dosage de graines. Enfin, du fait que l'ensemble porte-éléments semeurs 5 est attelé au châssis 2, il peut être aisément enlevé. Dans ce cas, le châssis 2 peut être utilisé pour toute autre application.

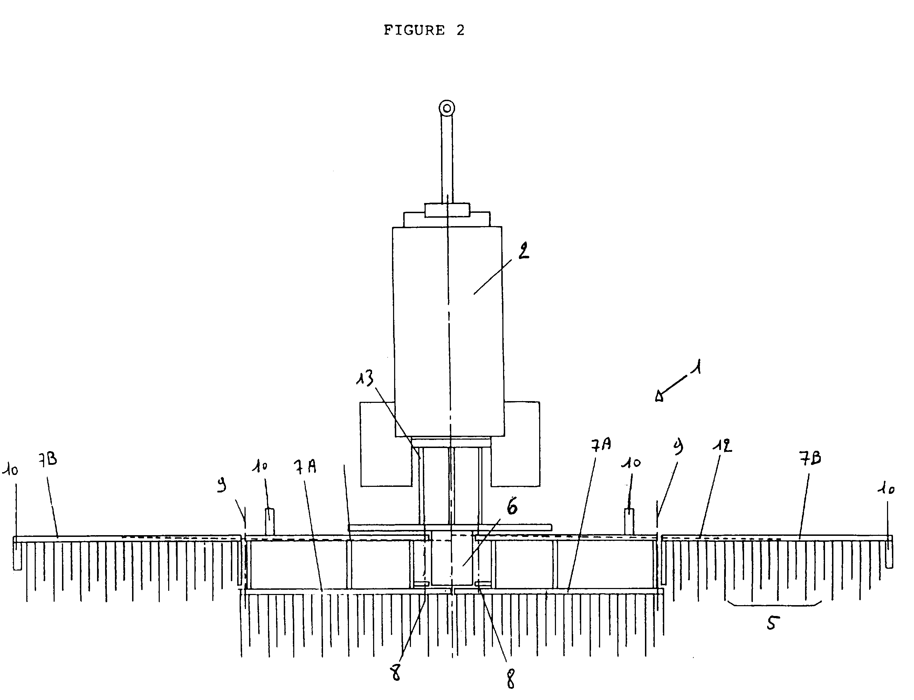

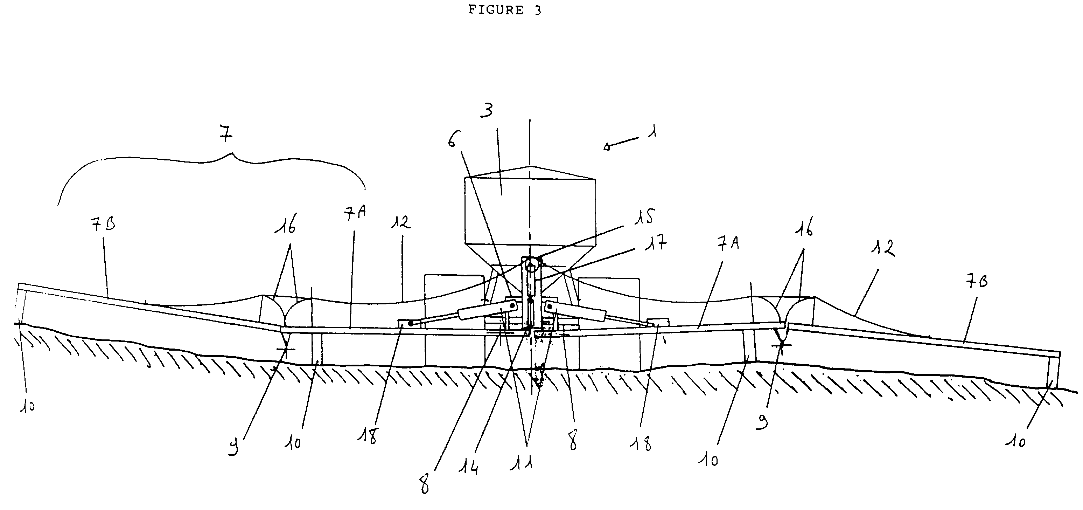

L'ensemble porte-éléments semeurs 5 comporte, outre un tronçon central 6, deux demi-rampes 7 articulées de part et d'autre dudit tronçon central 6. Ces deux demi-rampes 7 sont de préférence à fonctionnement indépendant pour offrir un plus grand nombre de possibilités de manoeuvre. Chaque demi-rampe 7 est constituée d'au moins deux éléments de rampe successifs, à savoir un élément intérieur 7A et un élément extérieur 7B. Ces éléments intérieur et extérieur sont articulés chacun autour d'un axe sensiblement horizontal parallèle à la direction d'avancement du semoir. Ainsi, l'élément intérieur 7A est articulé autour d'un axe 8, tandis que l'élément extérieur 7B est articulé autour d'un axe 9 d'articulation. Ces éléments intérieur et extérieur sont en outre équipés respectivement d'au moins un organe d'appui au sol. Dans l'exemple représenté aux figures 2 et 3, cet organe d'appui est constitué par une roue 10. De ce fait, en position travail, chaque élément intérieur 7A et extérieur 7B de chaque demi-rampe 7 s'étend au moins sensiblement horizontalement et transversalement à la direction de déplacement du semoir.

Chaque élément 7A ou 7B de demi-rampe 7 est en outre muni d'au moins un organe d'actionnement agencé pour permettre notamment le pivotement libre dudit élément autour de son axe d'articulation lorsque ledit élément de rampe est en appui au sol. Ainsi, dans l'exemple représenté à la figure 3, l'élément extérieur 7B peut librement pivoter autour de son axe d'articulation 9 lorsqu'il est en appui au sol, notamment au moyen de la roue 10, tandis que l'élément intérieur 7A peut quant à lui librement pivoter autour de son axe d'articulation 8 malgré la présence de son organe d'actionnement 12. Ce montage à pivotement libre, de préférence à l'intérieur d'une plage angulaire prédéterminée, de chaque élément de demi-rampe, en position travail de ladite demi-rampe, permet à l'ensemble de la demi-rampe de suivre parfaitement le profil du terrain. Il en résulte une efficacité maximale de travail au niveau des éléments semeurs 5. En effet, du fait de cette caractéristique du montage libre de l'articulation, l'utilisateur, en particulier le conducteur du véhicule tracteur, est certain que l'ensemble des éléments semeurs 5 pénétreront dans le sol et pourront remplir leur fonction. Tel n'aurait pas été le cas si les articulations 8 et 9 avaient été des articulations bloquées en position travail et si, par exemple, la roue 10 de l'élément 7B avait dû passer sur une bosse. Dans ce cas, une partie des éléments semeurs 5 soulevés au-dessus du sol n'aurait pu remplir sa fonction.

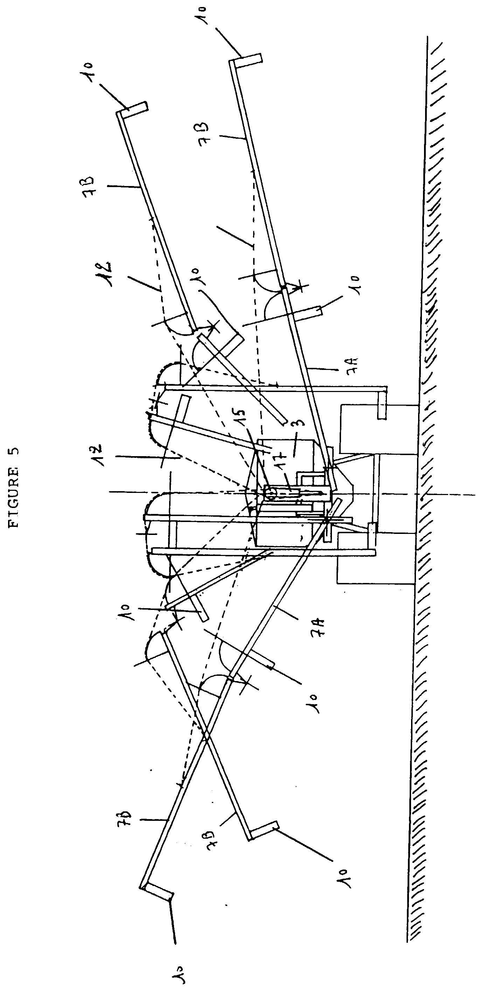

Parallèlement, les organes d'actionnement 11 et 12 des éléments 7A et 7B de chaque demi-rampe 7 sont agencés pour permettre le pivotement commandé de chaque élément de rampe autour de son axe d'articulation, en particulier, pour le passage dudit élément de rampe d'une position de travail à une position de transport dans laquelle ledit élément de rampe s'étend sensiblement verticalement et transversalement à la direction de déplacement du semoir, ou inversement. Un tel déplacement par pivotement commandé et contrôlé des éléments 7A, 7B de rampe est notamment représenté à la figure 5.

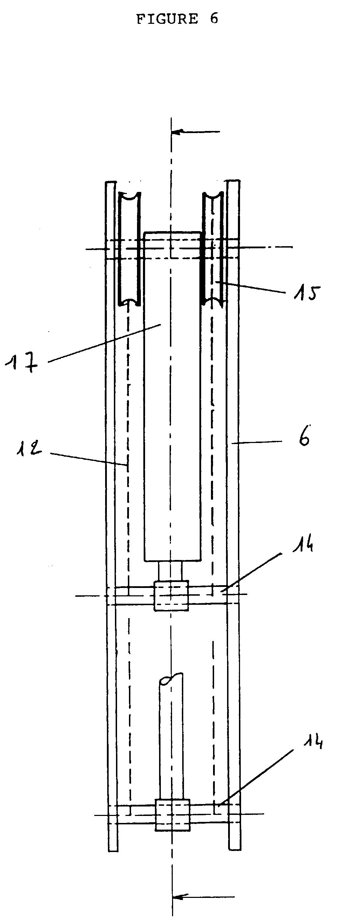

Pour pouvoir obtenir un tel fonctionnement des organes d'actionnement, ces organes d'actionnement 11 respectivement 12 des éléments 7A respectivement 7B de chaque demi-rampe 7 sont des organes de couplage qui couplent chaque élément 7A ou 7B de demi-rampe 7 à un autre élément de demi-rampe 7 et/ou au tronçon central 6. Dans l'exemple représenté aux figures 3 à 5, l'organe d'actionnement 12 de l'élément extérieur 7B de chaque demi-rampe 7 est un câble ancré à l'une de ses extrémités à l'élément extérieur 7B de demi-rampe 7 et à son autre extrémité sur une pièce mobile 14 portée par ledit tronçon central 6. Cette pièce 14 assure, au cours de son déplacement alternatif, la tension ou le relâchement du câble pour permettre, à l'état tendu du câble, un pivotement commandé dudit élément 7B de demi-rampe 7 et, à l'état lâche du câble, un pivotement libre dudit élément 7B de demi-rampe 7 autour de son axe 9 d'articulation. Le détail de cette pièce mobile 14 est notamment représenté à la figure 6. On constate, à travers cette figure, que le tronçon central 6 est constitué par un simple cadre. Deux montants de ce cadre sont reliés au moyen d'une traverse qui constitue la pièce mobile 14. Cette traverse 14 est susceptible de coulisser le long des montants du cadre 6 pour passer d'une position basse à une position haute et inversement. Ce déplacement est obtenu au moyen d'un vérin 17 dont le corps est fixé sur une seconde traverse dudit cadre constituant le tronçon central 6 et dont la tige est assujettie à ladite pièce mobile 14. L'axe, auquel est assujetti le corps du vérin, porte deux poulies 15 disposées également entre les montants du cadre 6. Le câble 12 s'enroule au moins partiellement autour de ces poulies 15. Ainsi, ce câble 12, entre ses points d'ancrage, passe au-dessus de l'articulation 9 entre lesdits éléments intérieur 7A et extérieur 7B de chaque demi-rampe 7 et prend appui sur au moins l'un desdits éléments intérieur 7A ou extérieur 7B, par l'intermédiaire par exemple d'un galet ou d'une pièce d'appui 16 appropriée, par exemple en forme de quart de cercle, avant de venir s'enrouler au moins partiellement autour de ladite poulie 15 et d'être fixé à la pièce mobile 14. Dans l'exemple représenté à la figure 3, l'extrémité intérieure de l'élément extérieur 7B et l'extrémité extérieure de l'élément 7A portent de manière fixe sur leur face supérieure un secteur en arc de cercle 16 dont les centres respectifs forment avec l'axe d'articulation 9 un triangle isocèle.

L'extension du vérin 17 assure l'abaissement de la pièce mobile 14 et par suite la tension du câble 12. A l'inverse, la rétraction du vérin 17 génère une remontée de la pièce mobile 14 et par suite un relâchement du câble 12. Cette conception de l'organe d'actionnement est identique qu'il s'agisse de l'organe d'actionnement 12 de l'élément extérieur 7B de la demi-rampe 7 de droite ou de gauche dans la figure 3.

L'organe d'actionnement 11 de l'élément intérieur 7A de chaque demi-rampe 7 est quant à lui constitué d'un vérin 11 dont l'une des extrémités est fixée au tronçon central 6 et dont l'autre extrémité est logée dans une lumière 18 dudit élément intérieur 7A de demi-rampe 7 pour pouvoir, en position travail du semoir, permettre, par un déplacement libre de l'extrémité dudit vérin à l'intérieur de ladite lumière 18, un libre pivotement dudit élément 7A de demi-rampe 7 autour de son axe 8 d'articulation à l'intérieur d'une plage angulaire prédéterminée.

Pour parfaire l'ensemble, le tronçon central 6 de l'ensemble porte-éléments semeurs 5 est muni d'au moins deux butées (non représentées) qui limitent respectivement le pivotement en direction du sol desdits éléments intérieurs 7A de demi-rampe 7 pour empêcher tout risque d'endommagement de leur organe d'actionnement 11 respectif. Grâce à ces butées, on évite en particulier un effort de traction trop important, en particulier sur la tige de vérin 11, lorsque ledit vérin est en position travail.

Le fonctionnement d'un tel semoir au moyen des organes d'actionnement, tels que décrits ci-dessus, est le suivant.

Comme représenté à la figure 2, le semoir en position travail est tel que chaque élément 7A, 7B de demi-rampe est en appui au sol par l'intermédiaire de la roue 10. Les articulations 8 et 9 sont débloquées du fait que le câble 12 est lâche, tandis que le vérin 11 se déplace librement à l'intérieur de sa lumière 18. Il en résulte un pivotement libre desdites articulations et, en particulier de l'articulation 8 dans une plage angulaire prédéterminée correspondant à la dimension de la lumière 18. L'articulation 9 d'axe horizontal est quant à elle réalisée de manière telle que l'élément extérieur 7B de demi-rampe est articulé sur l'extrémité extérieure de l'élément intérieur 7A. Cette articulation 9 est située à la partie inférieure des éléments extérieur et intérieur grâce à des chapes solidaires respectivement de l'élément intérieur 7A et de l'élément extérieur 7B de manière à permettre le mode de basculement desdits éléments tel qu'il sera décrit ci-après. En particulier, ces chapes affectent la forme d'un V, l'axe d'articulation 9 étant positionné à la pointe du V.

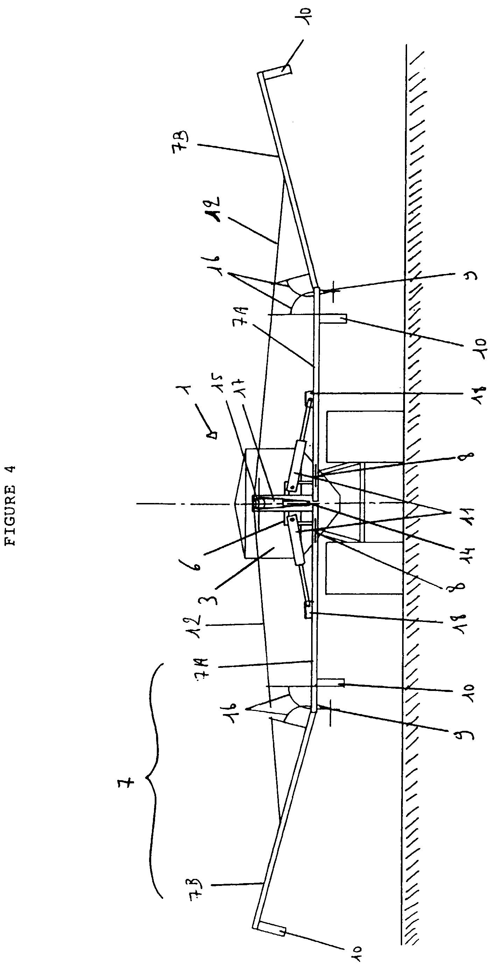

En position travail, telle que représentée à la figure 2, chaque élément de demi-rampe est disposé sensiblement horizontalement et transversalement à l'axe d'avancement du semoir. Les articulations 8, 9 sont libres, le câble 12 est détendu. Dans le cas où une manoeuvre doit être effectuée en bout de champ, en particulier pour permettre le passage du semoir au-dessus d'une clôture lors d'un demi-tour du tracteur, le câble 12 est tendu par abaissement de la pièce mobile 14, ce qui génère une force de traction sur les éléments extérieurs 7B de demi-rampe et, par suite, leur relèvement. Simultanément, l'organe de liaison 13 entre le châssis 2 et le tronçon central 6 vient en butée haute et assure le levage ou le relevage du tronçon central 6 sur lequel sont fixés les éléments intérieurs 7A de demi-rampe 7. Une telle position, telle que représentée à la figure 4, présente également l'avantage de limiter les risques d'accrochage des éléments extérieurs 7B de demi-rampe.

Du fait de la présence de butées sur le tronçon central 6, telles que décrites ci-dessus, les éléments intérieurs 7A de demi-rampe ne peuvent pivoter en direction du sol au risque d'endommager le vérin 11. Les articulations 8 respectives des éléments intérieurs 7A de la demi-rampe de droite et de la demi-rampe de gauche sont donc de ce fait bloquées.

Lors du passage des éléments de demi-rampe de la position travail à la position transport dans laquelle les éléments de demi-rampes s'étendent transversalement et sensiblement verticalement par rapport à la direction d'avancement du semis, la cinétique est la suivante. Les organes d'actionnement 12 des éléments extérieurs 7B de demi-rampe 7 constitués par les câbles sont dans un premier temps actionnés de manière à assurer la tension du câble 12 pour assurer un blocage de l'articulation 9. Une fois cette articulation bloquée ou simultanément au blocage de l'articulation, le tronçon central 6 est relevé en position haute maximale puis les organes d'actionnement 11 des éléments intérieurs 7A de chaque demi-rampe 7 sont actionnés. L'actionnement de ces vérins 11, en particulier la rétraction de ces derniers, a pour effet d'entraîner le relevage simultané ou indépendant des éléments intérieurs 7B de demi-rampe pour venir les positionner sensiblement verticalement transversalement par rapport à la direction d'avancement du semoir. Au cours de ce relevage, l'élément extérieur 7B, dont l'extrémité intérieure suit le déplacement de l'élément intérieur grâce à l'articulation 9, bascule par gravité vers le bas. Pendant la première phase de relevage de l'élément intérieur 7A, l'élément extérieur 7B occupe une position angulaire dans laquelle le câble 12 reste tendu du fait du poids de l'élément extérieur 7B. Ces mouvements de basculement en sens opposé des éléments de demi-rampe (l'élément 7A basculant vers le haut, l'élément 7B vers le bas) se poursuivent jusqu'à ce que l'élément intérieur 7A soit dans une position proche de la verticale dans laquelle l'élément extérieur 7B bascule par gravité pour venir en appui contre l'élément intérieur 7A. En résumé, le passage de la position travail à la position transport desdits éléments de demi-rampe s'effectue par actionnement des organes d'actionnement 12 des éléments extérieurs 7B de demi-rampe 7, puis subséquemment ou de manière simultanée, relevage du tronçon central 6, puis actionnement des organes d'actionnement 11 des éléments intérieurs 7A de demi-rampe 7. Le passage de la position transport à la position travail se fait par inversion des opérations précitées.

Pour faciliter le repliage des éléments extérieur et intérieur de demi-rampe et en particulier réduire leur encombrement, les éléments semeurs 5, portés respectivement par les éléments de demi-rampe extérieur 7B et intérieur 7A, sont décalés axialement pour constituer deux rangées parallèles d'éléments semeurs.

## Revendications

1. Semoir (1), du type comprenant un châssis (2) roulant tractable et un ensemble porte-éléments semeurs (5) constitué d'un tronçon central (6) porté par ledit châssis (2) à l'arrière de ce dernier et de deux demi-rampes (7), de préférence indépendantes, articulées sur ledit tronçon central (6) et équipées desdits éléments semeurs (5), caractérisé en ce que chaque demi-rampe (7) est constituée d'au moins deux éléments de rampe successifs, à savoir un élément intérieur (7A) et un élément extérieur (7B), articulés chacun autour d'un axe (8 ; 9) sensiblement horizontal parallèle à la direction d'avancement du semoir, et équipés respectivement d'au moins un organe d'appui au sol, tel qu'une roue (10), pour s'étendre en position de travail au moins sensiblement horizontalement et transversalement à la direction de déplacement du semoir, chaque élément (7A ; 7B) de demi-rampe (7) étant en outre muni d'au moins un organe d'actionnement (11 ; 12) agencé pour permettre d'une part, le pivotement libre dudit élément autour de son axe d'articulation (8 ; 9) lorsque ledit élément de rampe est en appui au sol, et d'autre part, le pivotement commandé dudit élément (7A ; 7B) de rampe, en particulier pour le passage dudit élément de rampe d'une position de travail à une position de transport dans laquelle ledit élément de rampe s'étend sensiblement verticalement et transversalement à la direction de déplacement du semoir.

2. Semoir selon la revendication 1,
caractérisé en ce que le tronçon central (6) de l'ensemble porte-éléments semeurs (5) est relié audit châssis (2) au moyen d'un organe de liaison (13) permettant un positionnement à hauteur réglable dudit tronçon central (6) par rapport audit châssis (2).

3. Semoir selon l'une des revendications 1 et 2,
caractérisé en ce que les organes d'actionnement (11 ; 12) des éléments (7A ; 7B) de chaque demi-rampe (7) sont des organes de couplage qui couplent chaque élément (7A ; 7B) de demi-rampe (7) à un autre élément de demi-rampe (7) et/ou au tronçon central (6).

4. Semoir selon l'une des revendications 1 à 3,
caractérisé en ce que l'organe d'actionnement (12) de l'élément extérieur (7B) de chaque demi-rampe (7) est un câble ancré à l'une de ses extrémités à l'élément extérieur (7B) de demi-rampe (7) et à son autre extrémité sur une pièce mobile (14) portée par ledit tronçon central (6), cette pièce (14) assurant au cours de son déplacement alternatif la tension ou le relâchement du câble pour permettre, à l'état tendu du câble, un pivotement commandé dudit élément (7B) de demi-rampe (7) et, à l'état lâche du câble, un pivotement libre dudit élément (7B) de demi-rampe (7) autour de son axe (9) d'articulation.

5. Semoir selon la revendication 4,
caractérisé en ce que le câble, entre ses points d'ancrage, passe au-dessus de l'articulation (9) entre lesdits éléments intérieur (7A) et extérieur (7B) de chaque demi-rampe (7) et prend appui au moins sur l'un desdits éléments intérieur (7A) ou extérieur (7B) par l'intermédiaire par exemple d'un galet.

6. Semoir selon l'une des revendications 1 à 5,
caractérisé en ce que l'organe d'actionnement (11) de l'élément intérieur (7A) de chaque demi-rampe (7) est constitué d'un vérin (11) dont l'une des extrémités est fixée au tronçon central (6) et dont l'autre extrémité est logée dans une lumière (18) dudit élément intérieur (7A) de demi-rampe (7) pour pouvoir, en position travail du semoir, permettre, par un déplacement libre de l'extrémité dudit vérin à l'intérieur de ladite lumière (18), un libre pivotement dudit élément (7A) de demi-rampe (7) autour de son axe (8) d'articulation à l'intérieur d'une plage angulaire prédéterminée.

7. Semoir selon l'une des revendications 1 à 6,
caractérisé en ce que le tronçon central (6) de l'ensemble porte-éléments semeurs (5) est muni d'au moins deux butées qui limitent respectivement le pivotement en direction du sol desdits éléments intérieurs (7A) de demi-rampe (7) pour empêcher tout risque d'endommagement de leur organe d'actionnement (11) respectif.

8. Semoir selon l'une des revendications 1 à 7,
caractérisé en ce que les éléments semeurs (5), portés respectivement par les éléments de demi-rampe extérieur (7B) et intérieur (7A), sont décalés axialement pour constituer deux rangées parallèles d'éléments semeurs (5).

9. Semoir selon l'une des revendications 1 à 8,
caractérisé en ce que le passage de la position travail à la position transport desdits éléments de demi-rampe s'effectue par actionnement des organes d'actionnement (12) des éléments extérieurs (7B) de demi-rampe (7), puis subséquemment ou de manière simultanée relevage du tronçon central (6), puis actionnement des organes d'actionnement (11) des éléments intérieurs (7A) de demi-rampe (7).
